Europäisches Patentamt

European Patent Office

Office européen des brevets

(11) Veröffentlichungsnummer : **0 063 775**
**B1**

(12) **EUROPÄISCHE PATENTSCHRIFT**

(45) Veröffentlichungstag der Patentschrift :
09.09.87

(51) Int. Cl.⁴ : **G 06 F 15/46**

(21) Anmeldenummer : 82103300.8

(22) Anmeldetag : 20.04.82

(54) Digitales Regel- und/oder Steuersystem.

(30) Priorität : 25.04.81 DE 3116549

(43) Veröffentlichungstag der Anmeldung :
03.11.82 Patentblatt 82/44

(45) Bekanntmachung des Hinweises auf die Patenterteilung : 09.09.87 Patentblatt 87/37

(84) Benannte Vertragsstaaten :
CH DE FR GB IT LI NL SE

(56) Entgegenhaltungen :
EP-A- 0 012 936
EP-A- 0 021 353

(73) Patentinhaber : Honeywell Regelsysteme GmbH
Kaiserleistrasse 55
D-6050 Offenbach am Main (DE)

(72) Erfinder : Daab, Heinz
Händelstrasse 29
D-6100 Darmstadt (DE)

(74) Vertreter : Rentzsch, Heinz et al
Honeywell Europe S.A. Holding KG Patent- und Lizenzabteilung Kaiserleistrasse 55
D-6050 Offenbach am Main (DE)

Jouve, 18, rue St-Denis, 75001 Paris, France

**Beschreibung**

Die vorliegende Erfindung bezieht sich auf ein Verfahren nach dem Gattungsbegriff des Patentanspruches 1.

Aus der Zeitschrift « Elektronik » 1976, Heft 3, Seite 87-89, sowie Heft 4 der gleichen Zeitschrift, Seite 63-68 ist es bekannt, eine digitale Regelung mittels Mikroprozessoren zu realisieren. Der Mikroprozessor führt dort aufgrund eines eingegebenen Programmes mit den Eingangsgrößen nach Analog/Digital-Umsetzung einen vorgegebenen Regelalgoritmus aus, um sodann nach Digital/Analog-Umsetzung die Stellgröße an ein Stellglied auszugeben. Für jeden unterschiedlichen Regelalgoritmus muß ein unterschiedliches Programm aufgestellt werden, wozu normalerweise nur ein entsprechend ausgebildeter Fachmann in der Lage ist. Eine Umstellung der Regelfunktion im Feld durch Bedienungspersonen ohne spezielle Fachkenntnisse ist daher nur schwer möglich.

Ausgehend von dem bekannten digitalen Regler ist es daher die Aufgabe der vorliegenden Erfindung, ein Verfahren anzugeben, bei dem durch einen entsprechenden Betrieb und eine darauf abgestellte Konfiguration des Mikroprozessors die Realisierung einer gewünschten Regel- und/oder Steuerfunktion erleichtert wird. Die Lösung dieser Aufgabe gelingt gemäß den im kennzeichnenden Teil des Patentanspruches 1 angegebenen Verfahrensschritten. Eine weitere Ausgestaltung des erfindungsgemäßen Verfahrens ist dem Unteranspruch entnehmbar.

Anhand eines in den Figuren der beiliegenden Zeichnung dargestellten Ausführungsbeispieles sei im folgenden die Erfindung näher erläutert. Es zeigt :

Figur 1  ein Blockdiagrammn einer Raumtemperatursteuerung, die durch das erfindungsgemäße System verwirklicht wird ;

Figur 2  ein nach Spalten und Zeilen aufgegliedertes Funktionsdiagramm für die Raumtemperatursteuerung gem. Fig. 1 ;

Figur 3  ein Blockschaltbild der zentralen Verarbeitungseinheit eines Mikroprozessors in der erfindungsgemäßen Konfiguration ; und

Figur 4a  und  4b ein Flußdiagramm zur Erläuterung der Arbeitsweise des Mikroprozessors.

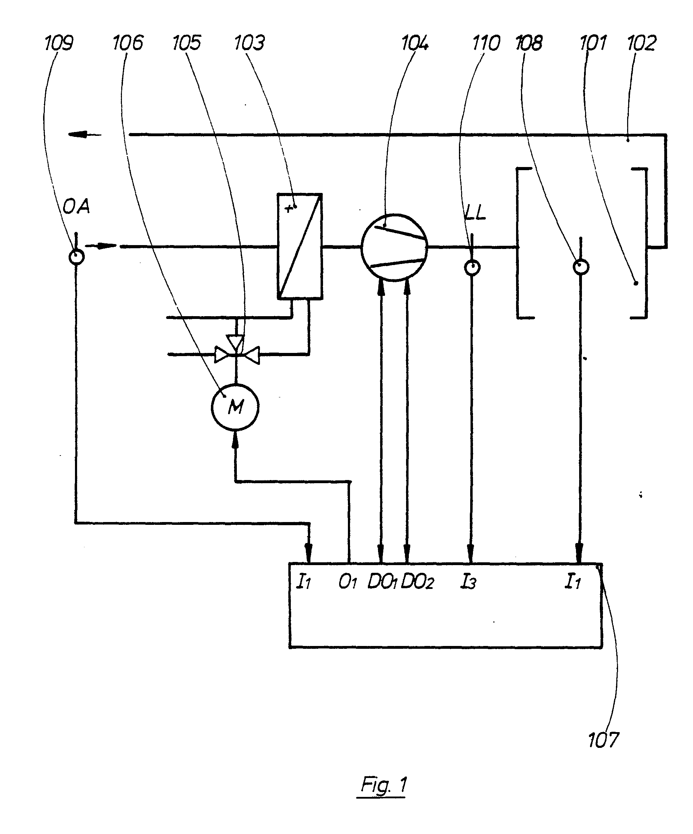

Figur 1  zeigt in einem vereinfachten Schema eine Temperatursteuerung für einen Raum 101. Dem Raum 101 wird hierbei über einen Luftkanal 102 je nach Art der Steuerung Heiz- oder Kühlluft zugeführt. Die Zufuhr der Luft erfolgt hierbei über einen Wärmeaustauscher 103 und ein Gebläse 104. Dem Wärmeaustauscher 103 wird über ein Mischventil 105 ein Heiz- oder Kühlmedium zugeführt, wobei ein Stellmotor 106 die Einstellung des Mischventils 105 vornimmt. Eine Regler- und Steuereinheit 107 erhält als Eingangsgrößen die über einen Fühler 108 gemessene Raumtemperatur, die über einen Fühler 109 gemessene Außentemperatur und die über einen Fühler 110 im Luftkanal gemessene Grenztemperatur zugeführt. In Abhängigkeit von diesen Eingangssignalen und einem in nicht näher dargestellter Weise vorgebbaren Sollwert erzeugt die Regel- und Steuereinheit 107 ein analoges Ausgangssignal 01 für den Stellmotor 106 sowie zeitlich gestaffelt zwei Schaltsignale D01 und D02 für die zwei Gebläsestufen des Gebläses 104.

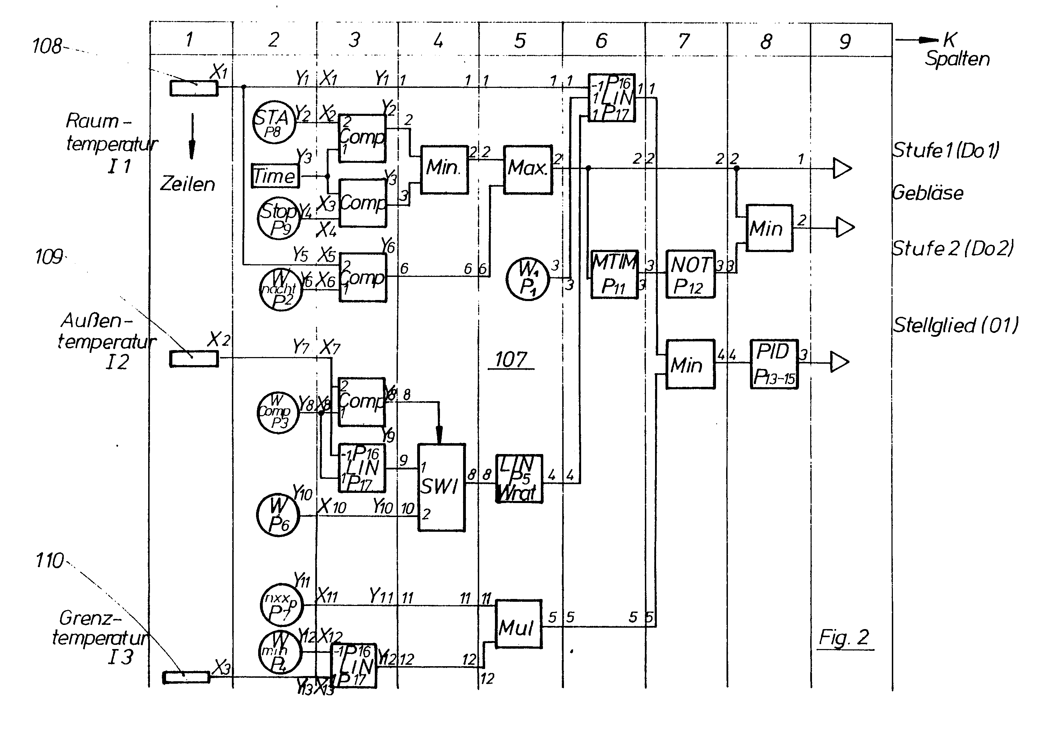

Figur 2  zeigt aufgegliedert in Spalten k und Zeilen i ein Funktionsdiagramn der Temperatursteuerung 107 gemäß Figur 1, wobei die dargestellten Kreise einstellbare Parameter und die dargestellten Rechtecke bestimmte Funktionen vorgeben. Die Funktionen können hierbei zeitunabhängig und auch zeitabhängig sein. Die Ausgänge $y_n$ einer jeden Spalte bilden zugleich die Eingänge $x_n$ der nächsten Spalte.

In der Spalte 1 sind die die verschiedenen Temperaturen erfassenden temperaturabhängigen Widerstände 108, 109 und 110 dargestellt, die die veränderlichen Eingangsgrößen bilden. In der Spalte 9 stehen die Größen D01, D02 und 01 als Ausgangsgrößen zur Verfügung.

Bevor die Realisierung des in Figur 2  dargestellten Funktionsdiagrammes der Raumtemperatursteuerung mittels eines entsprechend konfigurierten Mikroprozessors anhand eines Programmes sowie eines Flußdiagramnes näher beschrieben wird, sollen zunächst die verschiedenen Funktionen der Raumtemperatursteuerung anhand der Figur 2  kurz erläutert werden.

1. Nachtsteuerfunktion

Während des Nachtbetriebes ist das Gebläse normalerweise ausgeschaltet. Eine bestimmte Minimaltemperatur sollte aber auch während des Nachtbetriebes aufrechterhalten werden. Solange die über die Zeitfunktion « TIME » vorgegebene Zeit den durch den Parameter P9 vorgegebenen Wert nicht unterschreitet, befindet sich die Ausgangsgröße Y3 in Spalte 3 auf dem niedrigen Pegel und die Ausgangsgröße Y2 in Spalte 4 besitzt den gleichen Pegel. Wenn die Raumtemperatur größer als die über den Parameter P2 vorgebbare zulässige Nachttemperatur WN ist, besitzt auch die Ausgangsgröße Y6 in Spalte 3 den niedrigen Pegel, sodaß das Gebläse insgesamt ausgeschaltet ist. Fällt jedoch die Raumtemperatur unter die eingestellte zulässige Nachttemperatur WN, so nimmt die Ausgangsgröße Y2 in Spalte 5 den hohen Pegel ein und die Stufe 1 des Gebläses D01 wird eingeschaltet. Zugleich wird mit dieser Größe der Zeitgeber MTIM gestartet. Wenn die in dem Funktionsglied NOT überwachte Differenz

2

zwischen dem Parameter P12 und der durch das vorgeschaltete Zeitglied vorgegebenen Zeit größer als Null wird, so nimmt die Ausgangsgröße Y2 in Spalte 8 den hohen Pegel ein, und es wird die Stufe 2 des Gebläses D02 gestartet.

2. Außentemperaturkompensation

Die Außentemperatur wird mit dem durch den Parameter P3 vorgegebenen Kompensations-Startpunkt verglichen. Liegt sie oberhalb dieses Startpunktes, so weisen die Ausgangsgrößen Y8 in den Spalten 3 und 4 den Wert Null auf, der Parameter P6 ist nicht wirksam und der Steuerpunkt entspricht dem durch den Parameter P1 vorgegebenen Wert.

Liegt die Außentemperatur unterhalb des Kompensations-Startpunktes, so schaltet das Funktionsglied SWI seinen Eingang 1 auf den Ausgang Y8 in Spalte 4. Somit ist die Differenz zwischen der Außentemperatur und der Startpunkttemperatur am Ausgang Y8 der Spalte 4 verfügbar. Durch eine Multiplikation mit dem Parameter P5 in dem Funtionsglied LIN wird der Steuerpunkt in Spalte 6 auf den gewünschten Wert verschoben.

3. Untere Grenzfunktion

Die durch den Parameter P4 vorgegebene Minimaltemperatur wird mit der Lufttemperatur im Kanal verglichen. Die Differenz wird mit dem durch den Parameter P7 vorgegebenen Proportionalband multipliziert und das sich ergebende Signal wird dem Minimumselektor MIN in Spalte 7 zugeführt. Das jeweils niedrigste Signal entweder von der kompensierten Raumtemperaturschleife oder von der Schleife für die untere Grenztemperatur wirkt somit auf die PID-Reglerschleife ein.

4. Regelung

Bezüglich des eigentlichen Reglers vergleicht die Funktionsstufe LIN in Spalte 6 den durch den Parameter P1 vorgegebenen Sollwert zusammen mit dem Steuerpunkt-Verschiebesignal mit der Raumtemperatur. Das kombinierte Signal wird über die Auswahlstufe MIN der PID-Reglerstufe zugeführt, die nach entsprechender Umsetzung ein analoges Stellsignal 01 an das Stellglied in Form des Stellmotors liefert.

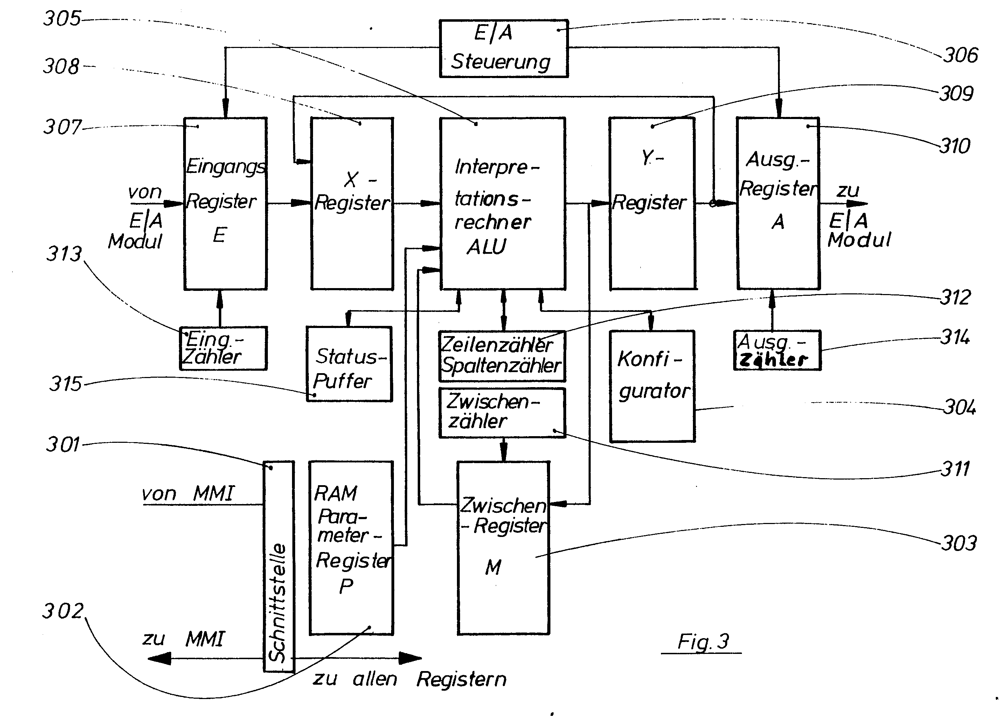

Alle diese Funktionen werden durch einen Mikroprozessor erzeugt, dessen Zentraleinheit schematisch in Figur 3 dargestellt ist und nachstehend näher beschrieben wird.

Mittels einer nicht dargestellten Tastatur- und Anzeigeeinrichtung MMI und über eine Schnittstelle 301 besitzt ein Progammierer Zugang zu allen Registern und Speichern.

In ein statisches Parameterregister 302 werden alle festen Parameter wie Sollwerte, Zeitkonstanten, Proportionalbänder usw. eingegeben. Ein dynamisches M-Zwischenregister 303 wird für die Zwischenspeicherung von zeitabhängigen Funktionen benutzt und enthält dynamische Parameter wie die Zeitverzögerung, Rückstellung usw. Ein Konfigurator 304 gibt über seine eingespeicherten Programmbefehle der Arithmetik- und Logikeinheit eines Interpretationsrechners ALU 305 die Funktionen vor, mit der dieser die Eingangsgrößen bzw. die Parameter zu behandeln hat. Die Eingangsgrößen werden von einem nicht dargestellten E/A-Modul auf Befehl einer E/A-Steuerung 306 in ein Eingangsregister 307 geholt. Nach dem Start des eigentlichen durch den Konfigurator 304 vorgegebenen Programmes werden die Eingangsgrößen von dem Eingangsregister 307 in ein X-Register 308 übertragen. Der Inhalt des X-Registers 308 wird sodann zeilenweise in der Recheneinheit 305 mit Funktionen behandelt und anschließend in einem Y-Register 309 abgelegt. Solange nicht alle Spalten des Funktionsdiagrammes gemäß Figur 2 und somit alle Funktionen betreffenden Befehle im Konfigurator 304 abgearbeitet sind, werden die pro Spalte errechneten und im Y-Register 309 abgespeicherten Werte zeilenweise in das X-Register 308 zurückübertragen und in der Recheneinheit 305 mit den Funktionen der nächsten Spalte behandelt. Erst wenn alle Zeilen der letzten Spalte abgearbeitet sind, erfolgt eine Übertragung des Inhalts des Y-Registers 309 in ein Ausgangsregister 310 und daraufhin aufgrund eines Befehles durch die E/A-Steuerung die Übertragung in einen E/A-Modul. Die Adressierung der verschiedenen Register 303 ; 307, 310 ; und 308, 309 erfolgt über einen Zwischenzähler 311, über einen Zeilen- und Spaltenzähler 312 sowie über Ein- und Ausgangszähler 313 und 314. Über einen Status-Pufferspeicher 315 können die verschiedenen Registerinhalte auf der nicht dargestellten Anzeigeeinrichtung zur Anzeige gebracht werden.

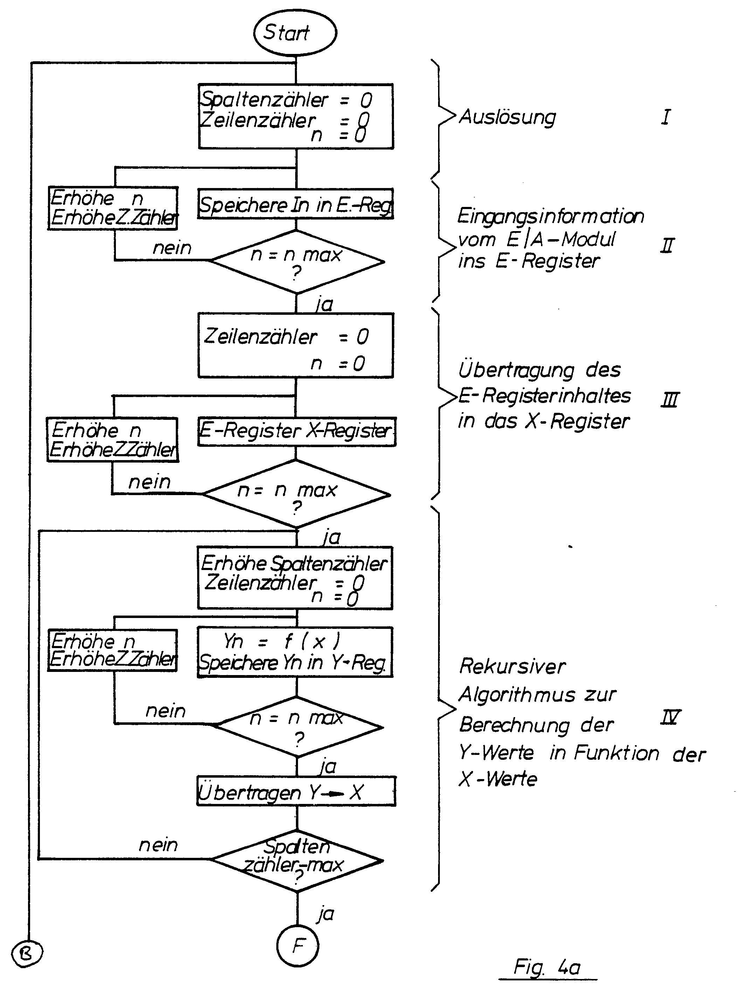

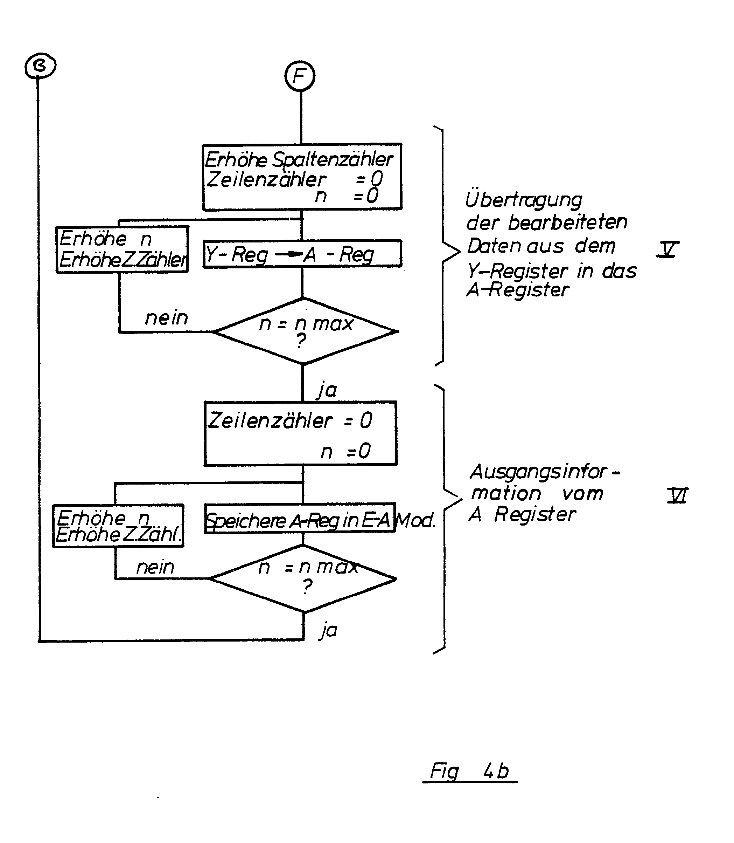

Zur Erläuterung des Rechenablaufes innerhalb der Zentraleinheit gemäß Figur 3 kann ein Flußdiagramm herangezogen werden, wie es in den Figuren 4a und 4b dargestellt ist. Wie man diesem Flußdiagramm entnimmt, wird nach dem Start des Programmes das System in einem ersten Schritt I ausgelöst, in dem der Spalten- und Zeilenzähler 312 auf Null eingestellt wird. In einem nächsten Schritt II wird die Eingangsinformation der Meßfühler 108, 109 und 110, nachdem diese in nicht dargestellter Weise in Digitalwerte umgesetzt worden ist, vom Ein/Ausgabe-Modul ins Eingangsregister E-307 übertragen. Dies geschieht unter Steuerung durch den Eingangszähler 313, wobei dessen Zählstand so lange erhöht wird, bis die maximale Zeilenzahl entsprechend einem Zählstand von 3 erreicht ist. Ist dies der Fall, so wird in einem nächsten Schritt III der Inhalt des Eingangsregisters 307 in das X-Register 308 übertragen.

3

Hierzu wird der Zeilenzähler auf Null gestellt und sein Zählstand wird so lange erhöht, bis die maximale Zeilenzahl, im vorliegenden Fall dem Zählstand 3 entsprechend, erreicht ist. Ist dieser maximale Zeilen-Zählstand erreicht, so wird in dem Berechnungsschritt IV der Zählstand des Spaltenzählers um 1 erhöht und der Zeilenzähler wiederum auf Null gestellt. Zeilenweise werden sodann der Inhalt des X-Registers 308, bzw. des Parameterregisters 302 über den Interpretationsrechner 305 geführt, um mit entsprechenden Funktionen verknüpft zu werden und anschließend in dem Y-Register 309 abgelegt zu werden. Ist dies pro Spalte für jede Zeile des X-Registers bzw. des Parameterregisters geschehen, so wird der Inhalt des Y-Registers 309 zu dem X-Register 308 zurückübertragen und es werden die nunmehr in dem X-Register befindlichen Werte zeilenweise in dem Interpretationsrechner 305 mit den Funktionen behandelt, die durch den Konfigurator 304 der Arithmetik- und Logikeinheit des Interpretationsrechners 305 vorgegeben sind. Die Ergebnisse werden wiederum zeilenweise im Y-Register 309 abgespeichert. Solange der maximale Spalten-Zählstand des Spaltenzählers noch nicht erreicht ist, wird diese Rechenschleife rekursiv durchlaufen. Ist der maximale Zählstand des Spaltenzählers erreicht, so werden im nächsten Schritt V die in dem Y-Register abgespeicherten errechneten Enddaten in das Ausgangsregister 310 übertragen. Dies geschieht, indem der Spaltenzähler auf den der letzten Spalte entsprechenden Zählstand und der Zeilenzähler auf den Wert Null eingestellt wird. Durch Erhöhung des Zählstandes des Zeilenzählers bis zu seinem maximalen Zählstand für diese Spalte werden die Daten des Y-Registers 309 in das Ausgangsregister 310 übertragen. Ist dies geschehen, so wird in einem letzten Schritt VI die in dem Ausgangsregister 310 gespeicherte Ausgangsinformation aufgrund eines Befehls der Ein/Ausgabe-Steuerung 306 zu einem nicht dargestellten Ein/Ausgabe-Modul übertragen. Dieser Modul steuert sodann digital bzw. analog die Stufen des Gebläses 104 bzw. den Stellmotor 106 (Figur 1). Auch diese Ausgabe der Ausgangsinformation wird durch den Zeilenzähler gesteuert, indem dieser zunächst auf Null gestellt wird und anschließend bis auf seinen maximalen Zeilenzählstand erhöht wird. Die Programmschleife verläuft sodann zurück zu dem Auslöseschritt I, um den ganzen Rechenvorgang erneut zu beginnen.

Das Funktionsdiagramm wird durch nachfolgendes, in dem Konfigurator 304 innerhalb der Zentraleinheit abgespeichertes Programm in entsprechende Regel- und Steuersignale umgesetzt. Bei dem nachfolgenden Programm sind links die Befehle angeschrieben, und rechts erfolgt eine Erläuterung der Funktion dieser Befehle. Soweit es sich um gleiche Befehle handelt, die nur bezüglich anderer Parameter oder Eingangsgrößen ausgeführt werden, wird beim weiteren Auftritt dieser Befehle innerhalb des Programmes auf eine Erläuterung verzichtet.

|  |  |  |  |
|---|---|---|---|
|  |  | BEGIN | Auslösung ; Spaltenzähler k = 0, Zeilenzähler i = 0 |
|  | INP | 3 | 3 im Eingangsregister 307 gespeicherte Eingangsgrößen werden in das X-Register 308 übertragen |
| Y 1 : | IDT | X1 | X1 wird ohne Änderung durch den Rechner 305 aus dem X-Register 308 in das Y-Register 309 übertragen |
| Y 2 : | PAR | P8 | Parameter P8 wird ohne Änderung durch den Rechner 305 aus dem Parameterregister 302 in das Y-Register 309 übertragen |
| Y 3 : | TIME |  | Eine vom Takt der Zentraleinheit abgeleitete Zeit wird unter Verwendung des Zwischenregisters 303 im Y-Register 309 abgelegt |
| Y 4 : | PAR | P9 |  |
| Y 5 : | IDT | X1 |  |
| Y 6 : | PAR | P2 |  |
| Y 7 : | IDT | X2 |  |
| Y 8 : | PAR | P3 |  |
| Y 10 : | PAR | P6 |  |
| Y 11 : | PAR | P7 |  |
| Y 12 : | PAR | P4 |  |
| Y 13 : | ITD | X3 |  |
|  | SLEV | 13 | Alle 13 Y-Registerwerte werden zurück ins X-Register übertragen ; Sprung in Spalte 3 |
| Y 2 : | COMP | X3, X2 | Vergleich von X3 (Zeit) mit X2 (P8) ; Y2 = 1, wenn X3 ≥ X2 Y2 = 0, wenn X3 < X2 |
| Y 3 : | COMP | X4, X3 |  |
|  | PONT | 6 | Zeilenzähler auf Zeile 6 |
| Y 6 : | COMP | X6, X5 |  |
|  | PONT | 8 |  |
| Y 8 : | COMP | X8, X7 |  |
| Y 9 : | LIN | X7, P16, X8, P17 | Skalierung bzw. P-Bereich Y9 = X7P16 + X8P17 |
|  | PONT | 12 |  |

4

Tabelle  (Fortsetzung)

```
Y 12 :   LIN     X12, P16,
                 X13, P17
         SLEV    12              Sprung in Spalte 4
         PONT    2
Y  2 :   MIN     X2, X3          Y2 = MIN (X2, X3) ; der kleinere Wert von X2 bzw. X3 wird weitergegeben
         PONT    8
Y  8 :   SWI     X9, X10, X8     Y8 = X9,  wenn X8 ≥ 1
                                 Y8 = X10, wenn X8 < 1
         SLEV    12              Sprung in Spalte 5
         PONT    2
Y  2 :   MAX     X2, X6          Y2 = MAX (X2, X6) ; der größere Wert von X2 bzw. X6 wird weitergegeben
Y  3 :   PAR     P1
Y  4 :   LIN     X8, P5
Y  5 :   MUL     X11, X12        Y5 = X11 × X12
         SELV    5               Sprung in Spalte 6
Y  1 :   LIN     X1P16,
                 X3P17,
                 X4P17
         PONT    3
Y  3 :   MTIM    X2, P11, 1      Ein Monoflop wird geschaltet, wenn X2 von 0 auf 1 schaltet ; P11 gibt
                                 die Schaltzeit vor
         SLEV    5               Sprung in Spalte 7
         PONT    3
Y  3 :   NOT     X3, P12         Y3 = P12 − X3
Y  4 :   MIN     X1, X5
         SLEV    4               Sprung in Spalte 8
         PONT    2
Y  2 :   MIN     X2, X3
Y  3 :   PID     X4, P13,        PID-Funktion ;
                 P14, P15        Y3^{t0} = Y3^{t0−1} + P13 × 4^{t0} + P14 × 4^{t0−1} + P15 × 4^{t0−2}
         SLEV    3               Sprung in Spalte 9
         OBIT    1, X1           Anschluß 1 = hoher  Pegel, wenn X1 ≥ 1
                                 Anschluß 1 = niedriger  " , wenn X1 < 1
         OBIT    2, X2           Anschluß 2 = hoher  Pegel, wenn X2 ≥ 1
                                 Anschluß 2 = niedriger  " , wenn X2 < 1
         AOP     1               1 Wert des Y-Registers wird in das Ausgangsregister übertragen, um
                                 analog ausgegeben zu werden
END
```

Parameter-Einstellung

PAR

| | | |
|---|---|---|
| P  1 : | 21.00 | Raumtemperatur-Sollwert °C |
| P  2 : | 15.00 | Raumtemperatur-Nachtsollwert °C |
| P  3 : | 23.30 | Kompensations-Startpunkt °C |
| P  4 : | 17.00 | Unterer Grenz-Sollwert |
| P  5 : | 20.00 | Kompensationsverhältnis in % (Winter) |
| P  6 : | 00.00 | Kompensationsverhältnis in % (Sommer) |
| P  7 : | 05.00 | Proportionalband-Multiplikator |
| P  8 : | 06.00 | Gebläse-Startzeit (h/min.) |
| P  9 : | 16.15 | Gebläse-Stopzeit (h/min.) |
| P 10 : | | nicht benutzt |
| P 11 : | 00.10 | Verzögerungszeit (sec.) |
| P 12 : | 00.01 | Konstante |
| P 13 : | 00.05 | Proportionalband °C |
| P 14 : | 03.00 | Integralwirkung (sec.) |
| P 15 : | 00.50 | Vorhaltwirkung (sec.) |

**Patentansprüche**

1. Verfahren zum Betrieb eines digitalen durch ein Funktionsdiagramm dargestellten Regel- und/oder Steuergerätes unter Verwendung eines mit Registern, Speichern, Zählern, einem Taktgenerator

# 0 063 775

und einem Rechenwerk ausgestatteten Mikroprozessors, gekennzeichnet durch die folgenden Schritte :

(a) das Funktionsdiagramm wird in elementare Einzelfunktionen matrixförmig aufgegliedert, wobei in jeder Spalte eine Anzahl von gleichzeitig ausgeführten Einzelfunktionen dargestellt ist und die Anzahl der Zeilen durch die Anzahl der zugeführten in einer Spalte errechneten Ausgangsgrößen bestimmt ist ;

(b) die der ersten Spalte zugeordneten Eingangsgrößen (Zustandsgrößen I1, I2, I3) werden in ein X-Register (308) eingeschrieben ;

(c) das Rechenwerk (305) ermittelt aus dem Inhalt des X-Registers (308), die der ersten Spalte zugeordneten Ausgangsgrößen, wobei die zur Ausführung der Einzelfunktionen erforderlichen Schritte durch in einem Konfigurator (304) gespeicherte Programmbefehle vorgegeben sind und zur Berechnung benötigte Parameter in einem Parameterregister (RAM-302) abgespeichert sind ;

(d) die der ersten Spalte zugeordneten Ausgangsgrößen werden in ein Y-Register (309) eingeschrieben ;

(e) der Inhalt des Y-Registers (309) wird in das X-Register (308) zurückübertragen ;

(f) die Schritte (c), (d) und (e) werden solange wiederholt bis die Einzelfunktionen der letzten Spalte ausgeführt worden sind ; und

(g) der Inhalt des Y-Registers (309) wird als Stellgröße ausgegeben.

2. Verfahren nach Anspruch 1, gekennzeichnet durch die Speicherung von zeitveränderlichen Größen in einem Zwischenregister (303).

## Claims

1. A method for operating a digital regulating and/or control device represented by a functional diagram under use of a microprocessor provided with registers, memories, counters, a clock generator and an arithmetic and logic unit, characterized by the following steps :

(a) The functional diagram is splitted up into a matrix of elementary individual functions, whereat each column represents a plurality of individual functions to be implemented at the same time and the number of lines is determined by the number of output values calculated within a column ;

(b) the input values (measured values I1, I2, I3) related to the first column are written into a X-register (308) ;

(c) the arithmetic and logic unit (305) evaluates from the contents of the X-register (308) the output values related to the first column, whereat the steps necessary for the implementation of the individual functions are provided by program instructions stored in a configurator (304) and parameters necessary for the calculation are stored in a parameter register (RAM-302) ;

(d) the output values related to the first column are written into a Y-register (309) ;

(e) the contents of the Y-register (309) is shifted back into the X-register (308) ;

(f) the steps (c), (d), and (e) are repeated until the individual functions of the last column are implemented ; and

(g) the contents of the Y-register (309) is outputted as a set value.

2. Method according to claim 1, characterized by the storage of time-variable values within an intermediate register (303).

## Revendications

1. Procédé de fonctionnement d'un appareil numérique de régulation et/ou de commande représenté par un diagramme fonctionnel, moyennant l'utilisation d'un microprocesseur équipé de registres, de mémoires, de compteurs, d'un générateur de cadence et d'une unité de calcul, caractérisé par les étapes opératoires suivantes :

(a) le diagramme fonctionnel est subdivisé, sous forme matricielle, en fonctions individuelles élémentaires, auquel cas un nombre de fonctions individuelles exécutées simultanément est représenté dans chaque colonne et le nombre des lignes est déterminé par le nombre des grandeurs de sortie envoyées, calculées dans une colonne ;

(b) les grandeurs d'entrée (grandeurs d'état I1, I2, I3) associées à la première colonne sont enregistrées dans un registre des X (308) ;

(c) l'unité de calcul (305) détermine, à partir du contenu des registres des X (308), les grandeurs de sortie associées à la première colonne, les pas nécessaires pour l'exécution des fonctions individuelles étant prédéterminés par des instructions de programme mémorisées dans un configurateur (304) et pouvant être mémorisées dans un registre de paramètres (RAM-302), pour le calcul de paramètres nécessaires ;

(d) les grandeurs de sortie associées à la première colonne sont enregistrées dans un registre des Y (309) ;

(e) le contenu du registre des Y (309) est transféré en retour dans le registre des X (308) ;

6

(f) les pas (c), (d) et (e) sont répétés jusqu'à ce que les fonctions individuelles de la dernière colonne aient été exécutées ; et

(g) le contenu du registre des Y (309) est délivré en tant que grandeur de réglage.

2. Procédé selon la revendication 1, caractérisé par la mémorisation de grandeurs, variables dans le temps, dans un registre intermédiaire (303).

Fig. 1

1

Fig. 2

0 063 775

Fig. 3

0 063 775

```
                    ( Start )
                        │
          ┌─────────────┤
          │      ┌───────────────────┐
          │      │ Spaltenzähler = 0 │
          │      │ Zeilenzähler  = 0 │        Auslösung          I
          │      │          n    = 0 │
          │      └───────────────────┘
          │          ┌───────┤
          │          │   ┌───────────────────────┐
  ┌───────────────┐  │   │ Speichere In in E.-Reg│    Eingangsinformation
  │ Erhöhe  n     │  │   └───────────────────────┘    vom E/A-Modul        II
  │ ErhöheZ.Zähler│  │            │                    ins E-Register
  └───────────────┘  │      ╱───────────╲
           │  nein   └────╱  n = n max   ╲
           └─────────────╲      ?        ╱
                          ╲───────────╱
                            │ ja
                    ┌───────────────────┐
                    │ Zeilenzähler  = 0 │        Übertragung des
                    │           n   = 0 │        E-Registerinhaltes    III
                    └───────────────────┘        in das X-Register
                        ┌───────┤
                        │   ┌───────────────────────┐
  ┌───────────────┐     │   │ E-Register X-Register  │
  │ Erhöhe  n     │     │   └───────────────────────┘
  │ ErhöheZZähler │     │            │
  └───────────────┘     │      ╱───────────╲
           │  nein      └────╱  n = n max   ╲
           └─────────────────╲     ?        ╱
                              ╲───────────╱
                                │ ja
                    ┌───────────────────────┐
                    │ Erhöhe Spaltenzähler  │
                    │ Zeilenzähler  = 0     │
                    │           n   = 0     │
                    └───────────────────────┘
                        ┌───────┤
                        │   ┌───────────────────────┐
  ┌───────────────┐     │   │ Yn = f(x)             │   Rekursiver
  │ Erhöhe  n     │     │   │ Speichere Yn in Y-Reg.│   Algorithmus zur
  │ ErhöheZZähler │     │   └───────────────────────┘   Berechnung der    IV
  └───────────────┘     │            │                  Y-Werte in Funktion der
           │  nein      │      ╱───────────╲            X-Werte
           └────────────└────╱  n = n max   ╲
                              ╲     ?        ╱
                              ╲───────────╱
                                │ ja
                        ┌───────────────────┐
                        │ Übertragen Y → X  │
                        └───────────────────┘
                                │
          ┌──nein────────╱───────────╲
          │             ╱ Spalten     ╲
          │             ╲ zähler=max   ╱
          │              ╲    ?       ╱
          │               ╲─────────╱
          │                   │ ja
        ( B )              ( F )
```

Fig. 4a

Ⓑ   Ⓕ

Erhöhe Spaltenzähler
Zeilenzähler    = 0
          n     = 0

Übertragung
der bearbeiteten
Daten aus dem
Y–Register in das
A–Register

Ⅴ

Erhöhe  n
Erhöhe Z.Zähler     Y- Reg ⟶ A - Reg

nein        n = n max
                 ?

ja

Zeilenzähler = 0

          n = 0

Ausgangsinformation   vom
A Register

Ⅵ

Erhöhe  n
Erhöhe Z.Zähl.     Speichere A-Reg in E-A Mod.

nein        n = n max
                 ?

ja

Fig   4b